(19) Europäisches Patentamt

European Patent Office

Office européen des brevets

(11) Veröffentlichungsnummer: **0 209 487 B1**

(12) **EUROPÄISCHE PATENTSCHRIFT**

(45) Veröffentlichungstag der Patentschrift: **05.08.92**

(21) Anmeldenummer: **86810271.6**

(22) Anmeldetag: **16.06.86**

Die Akte enthält technische Angaben, die nach
dem Eingang der Anmeldung eingereicht wurden
und die nicht in dieser Patentschrift enthalten sind.

(51) Int. Cl.⁵: **C09B 67/22**, C09B 67/50,
C09B 47/06, C08K 5/34,
C09D 7/00

(54) **Herstellung von Kupferphthalocyanin in Pigmentform.**

(30) Priorität: **20.06.85 GB 8515600**

(43) Veröffentlichungstag der Anmeldung:
**21.01.87 Patentblatt 87/04**

(45) Bekanntmachung des Hinweises auf die
Patenterteilung:
**05.08.92 Patentblatt 92/32**

(84) Benannte Vertragsstaaten:
**CH DE FR GB IT LI NL**

(56) Entgegenhaltungen:
**DE-A- 2 017 040**
**FR-A- 2 252 386**
**FR-A- 2 278 739**
**FR-A- 2 321 527**

(73) Patentinhaber: **CIBA-GEIGY AG**
**Klybeckstrasse 141**
**CH-4002 Basel(CH)**

(72) Erfinder: **Langley, Robert**
**22 Cheviot Drive Newton Mearns**
**Glasgow G77 5AS Schottland(GB)**
Erfinder: **Stewart, John Dewar**
**3 Marigold Place Panorama Avenue Edleen**
**Kempton Park Transvaal 1620(ZA)**
Erfinder: **Walls, Arthur Stark**
**1 Grougar Drive Kilmarnock**
**Ayrshire Schottland KA3 1UL(GB)**

**Beschreibung**

Die vorliegende Erfindung betrifft die Herstellung von stabilisiertem Kupferphthalocyanin (CuPc) in Pigmentform.

Die GB-PS 1 558 663 beschreibt ein Verfahren zur direkten Synthese von CuPc in Pigmentform durch Zugabe eines Katalysators und/oder eines Kristallformbeeinflussers zu Beginn der Reaktion. Im Falle von $\alpha$-CuPc kann es sich dabei unter anderem auch um 1,2,4-Trichlor-3-phenoxy-CuPc handeln. Diese Verbindung ist bei der Synthese von CuPc immer von Anfang an vorhanden und CuPc wird direkt in Pigmentform erhalten, ohne dass Säureanteigen oder mechanisches Pulverisieren notwendig wäre.

In den meisten Fällen jedoch, wo die obenerwähnte direkte Synthesemethode nicht angewandt wird, erhält man rohes CuPc, welches nachträglich in die Pigmentform umgewandelt werden muss.

CuPc in Pigmentform wird normalerweise durch an sich bekannte Verfahren, wie z.B. Salzmahlung oder Säureanteigen von rohem CuPc, erhalten. Je nach angewandtem Verfahren erhält man $\beta$-CuPc oder das weniger stabile $\alpha$-CuPc. Es ist selten nötig $\beta$-CuPc zu stabilisieren, aber $\alpha$-CuPc wandelt sich bei bestimmten Anwendungen leicht in $\beta$-CuPc um, wenn es nicht stabilisiert wird. Die Stabilisierung wird normalerweise durch Zugabe von chloriertem CuPc gewährleistet. Allerdings verursacht die Zugabe der benötigten Menge an chloriertem CuPc zu dem zu stabilisierenden $\alpha$-CuPc eine Farbverschiebung von rötlichem Blau nach grünlichem Blau.

Die FR-A 2 278 739 beschreibt die Stabilisierung von CuPc durch Einarbeiten eines gegebenenfalls durch chlorsubstituiertes Phenyl substituierten Tetraphenoxyphthalocyaninderivats, das im CuPc-Molekülteil selbst nicht chloriert ist. Es wird auch ausgeführt, dass die Einführung von Chlor in den Kern des CuPc-Moleküls Nachteile mit sich bringt.

Es ist nun gefunden worden, dass, wenn rohes CuPc in Anwesenheit von Trichlorphenoxy-CuPc in die Pigmentform umgewandelt wird, überraschenderweise ein Produkt erhalten wird, welches genügend thermostabil und lösungsmittelstabil ist, um einerseits zur Färbung von Kunststoffen und andererseits zur Einarbeitung in Anstrichfarben, Lacken und Tinten verwendet zu werden, wobei zusätzlich der rotstichige Blauton von $\alpha$-CuPc weitgehend erhalten bleibt.

Das erfindungsgemäss verwendete Trichlorphenoxy-CuPc ist keine reine Verbindung. Es wird zusammen mit CuPc und/oder chloriertem CuPc hergestellt, durch Ersatz eines kleineren Teils des für die Herstellung von CuPc oder chloriertem CuPc verwendeten Phthalsäureanhydrids mit einer äquivalenten Menge eines Trichlorphenoxycyanbenzoesäureesters. Letzterer kann z.B. gemäss der in der GB-PS 1 382 925 beschriebenen Methode hergestellt werden.

Die vorliegende Anmeldung betrifft demnach ein Verfahren zur Umwandlung von rohem Kupferphthalocyanin (CuPc) in die Pigmentform, durch an sich bekannte Methoden, dadurch gekennzeichnet, dass 0,5 bis 30 Gew.%, bezogen auf CuPc, Trichlorphenoxy-CuPc, welches zusammen mit CuPc und/oder chloriertem CuPc, durch Ersatz von 0,5 bis 25 Gew.% des für die Herstellung von CuPc oder chloriertem CuPc verwendeten Phthalsäureanhydrids mit einer äquivalenten Menge an 3,4,6-Trichlor-5-phenoxy-2-cyanbenzoesäurealkyl- oder -phenylester erhalten wird, im rohen CuPc während der Konditionierung eingearbeitet wird.

Als Alkylester kommen insbesondere Niederalkyl-, z.B. Ethyl- oder bevorzugt Methylester in Frage.

Die Menge des im erfindungsgemässen Verfahren eingesetzten Trichlorphenoxy-CuPc ist bevorzugt zwischen 1 und 10 Gew.%. Das CuPc kann chlorfrei sein oder es kann bis zu 6 Gew.%, beispielsweise 1-3 % Chlor in 2-Stellung enthalten. Bevorzugt ist CuPc chlorfrei.

Die Umwandlung des rohen CuPc in seine Pigmentform kann dadurch bewerkstelligt werden, dass das rohe CuPc mit dem Trichlorphenoxy-CuPc vermischt und in Gegenwart eines nach dem Mahlen entfernbares Mahlhilfsmittels in fester Partikelform gemahlen wird. Beim Mahlhilfsmittel in fester Partikelform kann es sich um ein Alkali- oder Erdalkalimetallsalz einer Mineralsäure handeln, wie z.B. Natrium- oder Calciumchlorid. Es kann in einer Menge bis zu einem Maximum von 500 Gew.%, bezogen auf die Gesamtmenge der CuPc-Zusammensetzung eingesetzt werden. Zusätzlich kann auch ein Alkalimetallsalz einer organischen Säure in einer Menge zwischen 2,5 bis 25 Gew.%, bezogen auf das Mahlhilfsmittel, während des Mahlprozesses eingesetzt werden. Ein geeignetes Alkalimetallsalz ist Natriumacetat.

Das Produkt dieses Verfahrens ist ein stabiles CuPc in Pigmentform. Es handelt sich vorwiegend um $\alpha$-CuPc. Ist $\beta$-CuPc erwünscht, so muss die Mahlung in Gegenwart von 0,5-10 Gew.% einer organischen Flüssigkeit, z.B. Diethylanilin, bezogen auf die Gesamtmenge der CuPc-Zusammensetzung, durchgeführt werden.

Das gemahlene Material kann nachträglich auch mit einem polaren, wenigstens teilweise in Wasser löslichen organischen Lösungsmittel, wie z.B. Isopropanol behandelt werden, um ein Pigment bestimmter Partikelgrösse mit erhöhten Pigmenteigenschaften zu erhalten.

Eine weitere Methode zur Umwandlung von rohem CuPc in seine Pigmentform gemäss der vorliegenden Erfindung besteht darin, das rohe CuPc mit dem Trichlorphenoxy-CuPc zu vermischen, dass Gemisch mit konzentrierter Schwefelsäure zu behandeln oder darin zu lösen und danach das CuPc wieder auszufällen durch Eintragen der sauren Lösung oder Aufschlämmung in Wasser.

Die Menge an eingesetzter Schwefelsäure kann zwischen 200 und 1500 Gew.%, bezogen auf die Gesamtmenge der CuPc-Zusammensetzung, variieren und die Behandlung kann bei Temperaturen zwischen 0 und 100°C, bevorzugt zwischen 40 und 80°C vorgenommen werden.

Wenn erwünscht kann auch ein oberflächenaktives Mittel dem Wasser vor dem Eintragen der sauren Lösung oder Aufschlämmung zugegeben werden, zweckmässig in einer Menge von 0,5 bis 10 Gew.%, bezogen auf die Gesamtmenge der CuPc-Zusammensetzung. Ein geeignetes oberflächenaktives Mittel ist Dodecylbenzolsulfonsäure.

Das Produkt dieses Vefahrens ist ein stabiles α-CuPc in Pigmentform. Es kann, wenn erwünscht, einer Mahlung unterworfen werden, z.B. wie oben beschrieben, um ein Pigment bestimmter Partikelgrösse zu erhalten.

Eine alternative Methode für die Umwandlung von rohem CuPc in seine Pigmentform besteht darin, dass das rohe CuPc in konzentrierter Schwefelsäure gelöst und danach durch Eintragen der Lösung in Wasser wieder ausgefällt wird, das erhaltene Produkt z.B. wie oben beschrieben gemahlen wird, wobei das Trichlorphenoxy-CuPc während des Mahlprozesses eingearbeitet wird.

Die nach dem erfindungsgemässen Verfahren erhaltenen Pigmente sind rein und farbstark und eignen sich sehr gut zum Pigmentieren von hochmolekularem organischem Material. Sie sind z.B. genügend hitzebeständig um organische Polymere, beispielsweise Kautschuk, PVC und Polyolefine, zu färben. Sie sind auch genügend lösungsmittelbeständig um für die Färbung von Lack-, Anstrich- und Druckfarben angewendet zu werden.

Weitere Gegenstände der vorliegenden Erfindung sind hochmolekulare organische Materialien, insbesondere organische Polymere oder Lack-, Anstrich- oder Durckfarben, die als Farbstoff ein nach dem erfindungsgemässen Verfahren erhaltenes stabilisiertes CuPc in Pigmentform enthalten.

Die folgenden Beispiele erläutern die Erfindung. Teile bedeuten dabei jeweils Gewichtsteile und Prozente Gewichtsprozente, wenn nicht anders definiert.

Beispiel 1

a) 7,5 Teile Phthalsäureanhydrid, 1,45 Teile Kupfer(I)chlorid und 13,3 Teile Harnstoff werden in einem mit Rührer versehenen Reaktionskessel einem Gemisch aus 23,3 Teilen o-Nitrotoluol, 0,05 Teilen Ammoniummolybdat und 1,55 Teilen 3,4,6-Trichlor-5-phenoxy-2-cyanbenzoesäure-methylester unter Rühren zugegeben. Die Temperatur wird innert 4 Stunden auf 165-170°C erhöht und das Reaktionsgemisch bis zum Schluss der Reaktion unter Rühren reagieren gelassen.

Die Reaktionsmasse wird danach in einen zweiten, ebenfalls mit Rührer versehenen Reaktionskessel enthaltend 27,3 Teile Wasser, 4,3 Teile 47%ige Natronlauge, 0,16 Teile geschwefeltes Rizinusöl und 0,25 Teile Alkylphenolethoxylat überführt. Das Lösungsmittel wird mittels Dampfdestillation entfernt.

Der Rückstand wird abfiltriert und alkalifrei gewaschen. Der Filterkuchen wird in 40 Teilen 10%iger Salzsäure wieder aufgeschlämmt, filtriert, neutral gewaschen und der Filterkuchen getrocknet. Man erhält 7,5 Teile rohes CuPc enthaltend 38 % (31,4 Mol%) Trichlorphenoxy-CuPc.

b) Folgendes Gemisch wird in einer mit 12 mm Stahlkugeln beschickten 1 l-Vibrationsmühle gemahlen:

| | |
|---|---|
| 24,2 Teile | rohes CuPc |
| 1,3 Teile | des wie unter a) beschrieben erhaltenen rohen CuPc enthaltend 38 % Trichlorphenoxy-CuPc |
| 57,5 Teile | Natriumchlorid |
| 13,0 Teile | wasserfreies Calciumchlorid |
| 4,0 Teile | wasserfreies Natriumacetat |

Nach der Mahlung wird das Mahlgut einer sauren Lösung enthaltend 500 Teile Wasser und 30 Teile konzentrierter Salzsäure zugegeben, auf 60°C erwärmt und 30 Minuten gerührt. Die Aufschlämmung wird dann filtriert und der Filterkuchen mit Wasser säure- und salzfrei gewaschen und bei 60°C getrocknet.

Versuch 1

0,5 Teile des wie oben unter b) beschrieben erhaltenen Pigments werden durch kräftiges Handrühren mit 5 Teilen Titandioxid und 100 Teilen einer PVC-Zusammensetzung bestehend aus 63 Teilen Emulsions-PVC mit K-Wert 72-74, 1,5 Teilen Barium/Cadmium-Stabilisator und 35,5 Teile Weichmachermischung (90 % Bis-2-ethylhexylphthalat, 8,5 % epoxidiertes Sojabohnenöl, 1,5 % eines geeigneten Chelatbildners) vorgemischt. Das Gemisch wird auf einer Zweiwalzenmühle bei 150°C/110°C stabilisiert und während 8 Minuten gemahlen. Die erhaltene PVC-Folie wird bei 160°C formgepresst. Man erhält gepresste PVC-Folien stark rotstichig blauer Farbe.

Versuch 2

0,5 Teile des wie oben unter b) beschrieben erhaltenen Pigments werden gründlich in einem Teil Bis-2-ethylhexyl-phthalat-Weichmacher dispergiert und die erhaltene Dispersion in einem 180°C heissen Oelbad während 10 Minuten erhitzt.

Eine weitere Dispersion wird in der genau gleichen Weise hergestellt aber keiner Hitzebehandlung unterworfen.

In beiden Fällen werden 0,188 Teile der wie oben beschrieben hergestellten Dispersion durch kräftiges Handrühren mit einem Teil Titandioxid und 100 Teilen der wie in Versuch 1 definierten PVC-Zusammensetzung vorgemischt. Das Gemisch wird wie in Versuch 1 beschrieben in einer Zweiwalzenmühle stabilisiert, gemahlen und formgepresst.

Die erhaltenen gepressten PVC-Folien sind in beiden Fällen von stark rotstichig blauer Farbe. Die beiden Folien unterscheiden sich bezüglich Farbton und Farbstärke kaum oder gar nicht voneinander.

Wenn aber das Pigment ohne Zusatz von Trichlorphenoxy-CuPc hergestellt wird, so erhält man im Falle der PVC-Folie, die mit der hitzebehandelten Weichmacher-Dispersion hergestellt wird, eine erheblich grünstichigere blaue Farbe von geringerer Farbstärke als im Falle der PVC-Folie, die mit der unbehandelten Weichmacher-Dispersion hergestellt wird.

Beispiele 2-7

Beispiel 1 wird wiederholt, wobei das Mahlgut jedoch wie in der nachfolgenden Tabelle angegeben zusammengesetzt ist (in Gewichtsteilen):

| Material | Bsp. 2 | Bsp. 3 | Bsp. 4 | Bsp. 5 | Bsp. 6 | Bsp. 7 |
|---|---|---|---|---|---|---|
| Rohes CuPc | 20.9 | 12.2 | - | 37.9 | 18.5 | 18.5 |
| Rohes CuPc 2 % chloriert | - | - | 20.1 | - | - | - |
| Rohes CuPc enthaltend 38 % Trichlorphenoxy-CuPc | 7.4 | 13.4 | 5.8 | 2.1 | 1.0 | 1.0 |
| Natriumchlorid | 68.0 | 57.4 | 70.1 | 33.4 | 23.1 | 23.1 |
| Calciumchlorid (wasserfrei) | - | 13.0 | - | 20.0 | 23.1 | - |
| Natriumacetat (wasserfrei) | 3.7 | 4.0 | 4.0 | 6.6 | - | - |
| Calciumchlorid (mit Kristallwasser) | - | - | - | - | - | 23.1 |

0,04 Teile der Pigmente gemäss den Beispielen 2-4 und 0,5 Teile Titandioxid werden zusammen mit 100 Teilen Polyethylen hoher Dichte in einer Zweiwalzenmühle lange genug und bei genügend hoher Temperatur gemahlen, um eine Polyethylenfolie zu erhalten, welche von der Mühle abgezogen und abgeschnitzelt wird. Das abgeschnitzelte Material wird dann bei 200°C gleichmässig durch eine Spritzgussmaschine gepresst. Man erhält ein Formstück aus Polyethylen hoher Dichte von stark rotstichiger blauer Farbe. Dieses Formstück wird zur Untersuchung der Hitzebeständigkeit verwendet. Das Verfahren wird mehrmals wiederholt, wobei die Temperatur der Spritzgussmaschine jedes Mal um 20°C höher eingestellt wird.

Die stark rotstichig blaue Farbe bleibt bis zu einer erheblich höheren Temperatur erhalten als in den Fällen, wo ein Pigment gemäss den Beispielen 2-4 aber ohne Zusatz von Trichlorphenoxy-CuPc eingesetzt wird.

Die gemäss den Beispielen 5-7 hergestellten Pigmente werden in PVC gemäss den in Beispiel 1 beschriebenen Methoden eingearbeitet und ergeben ähnliche Resultate.

Beispiel 8

87 Teile rohes CuPc und 13 Teile rohes CuPc enthaltend 38 % Trichlorphenoxy-CuPc, welches gemäss dem in Beispiel 1a) beschriebenen Verfahren hergestellt wird, werden in 1000 Teilen 98%iger Schwefelsäure bei 60°C gelöst. Die erhaltene Lösung wird unter heftigem Rühren in 10000 Teile Wasser enthaltend 5 Teile Dodecylbenzolsulfonsäure bei Zimmertemperatur eingetragen. Es wird 30 Minuten weitergerührt, dann filtriert und der Filterkuchen wird mit Wasser säurefrei gewaschen und bei 60°C getrocknet.

3 Teile Schwefel werden bei 35°C/30°C mit 200 Teilen natürlichem Kautschuk in einer Zweiwalzenmühle vermahlen, wobei 1 Teil des wie oben beschrieben hergestellten Pigments eingearbeitet wird. Die erhaltene Folie wird danach bei 150°C formgepresst. Man erhält ein Kautschuk-Formstück stark rötlicher blauer Farbe.

Beispiel 9

29 Teile rohes CuPc, 45 Teile rohes chloriertes CuPc mit 2 % Chlor und 26 Teile rohes CuPc enthaltend 38 % Trichlorphenoxy-CuPc, welches gemäss dem in Beispiel 1a) beschriebenen Verfahren hergestellt wird, werden in 1000 Teilen 98%iger Schwefelsäure bei 60°C gelöst. Die erhaltene Lösung wird unter heftigem Rühren bei Zimmertemperatur in 10000 Teilen Wasser enthaltend 5 Teile Dodecylbenzolsulfonsäure eingetragen. Es wird 30 Minuten weiter gerührt, dann filtriert und der Filterkuchen wird mit Wasser säurefrei gewaschen und bei 60°C getrocknet. Das so erhaltene Pigment ergibt in Polyethylen hoher Dichte eingearbeitet ähnliche Resultate wie jene gemäss den Beispielen 2-4.

Beispiel 10

100 Teile rohes CuPc werden in einem Reaktionskessel enthaltend 364 Teile 70%ige Schwefelsäure bei 20°C zugegeben und das Gemisch wird 3 Stunden gerührt.
Dann werden 1000 Teile Wasser zugegeben und die Temperatur auf 90°C erhöht. Danach wird die Suspension filtriert und der Filterkuchen zuerst mit Wasser und dann mit einer Ammoniaklösung, bestehend aus 3,3 Teilen konzentriertem, 33%igem Ammoniak und 660 Teilen Wasser, säurefrei gewaschen. Zuletzt wird der Filterkuchen noch mit heissem Wasser sulfatfrei gewaschen und bei 100°C getrocknet.
Das so erhaltene CuPc in Pigmentform wird dann in einer mit 38 mm Stahlkugeln beschickten 178 l-Kugelmühle in einem Gemisch folgender Zusammensetzung gemahlen:

| 100 Teile | CuPc in Pigmentform, erhalten nach der oben beschriebenen Methode |
| 8 Teile | rohes CuPc enthaltend 38 % Trichlorphenoxy-CuPc, gemäss Beispiel 1a) |
| 253 Teile | Natriumchlorid |
| 15 Teile | Natriumacetat (wasserfrei) |

Nach der Mahlung wird das Mahlgut wie in Beispiel 1 beschrieben verarbeitet.
50 Teile des so erhaltenen Pigments werden in einer Kugelmühle mit 100 Teilen eines Glycerol-Kokosnuss-Alkyl/Xylol-Gemisches (60 % Feststoffe), welches in 257 Teilen eines 3:1 Xylol/Butanol-Gemisches gelöst ist, vermahlen. Nach dem Dispergieren werden weitere 271 Teile des Glycerol-Kokosnuss-Alkyl/Xylol-Gemisches zusammen mit 157 Teilen isobutyliertes Melanin/Formaldehyd-Harz (60 % Feststoffe in Isobutanol) in das Mahlgut gegeben und durch weiteres Mahlen homogenisiert. Man erhält einen blauen Volltonlack.
Ein Weissverschnitt wird durch Mischen von 5 Teilen des wie oben beschrieben erhaltenen blauen Volllton-Lackes mit 25 Teilen eines weissen Alkylmelanin/Formaldehyd-standardlacks in der Weise, dass das Verhältnis von organischem zu anorganischem Pigment 1:25 beträgt, hergestellt. Man erhält ein stark rotstichig blaues Produkt.

Beispiel 11

Das Beispiel 1 wird mit folgender Zusammensetzung des Mahlgutes wiederholt, um vorwiegend $\beta$-CuPc zu erhalten:

| 35,0 Teile | rohes CuPc |
| 2,0 Teile | rohes CuPc enthaltend 38 % Trichlorphenoxy-CuPc, gemäss Beispiel 1a) |
| 68,5 Teile | wasserfreies Calciumchlorid |
| 4,6 Teile | Natriumacetat in Kristallform |
| 2,0 Teile | Diethylanilin |

Das erhaltene Pigment wird gemäss den in Beispiel 1 beschriebenen Methoden in PVC eingearbeitet. Man erhält eine PVC-Folie mit der charakteristischen grünstichig blauen Farbe von $\beta$-CuPc.

Beispiel 12

a) 6,11 Teile Phthalsäureanhydrid, 1,45 Teile Kupfer(I)chlorid und 13,3 Teile Harnstoff werden in einem mit Rührer versehenen Reaktorkessel einem Gemisch aus 23,3 Teilen o-Nitrotoluol, 0,05 Teilen Ammonimmolybdat und 4,9 Teilen 3,4,6-Trichloro-5-phenoxy-2-cyanbenzoesäure-methylester unter Rühren zugegeben. Die Temperatur wird innert 4 Stunden auf 165-170°C erhöht und das Reaktionsgemisch bis zum Schluss der Reaktion unter Rühren reagieren gelassen.

Die Reaktionsmasse wird danach in einen zweiten, ebenfalls mit Rührer versehenen Reaktionskessel enthaltend 27,3 Teile Wasser, 4,3 Teile 47%ige Natronlauge, 0,16 Teile geschwefeltes Rizinusöl und 0,25 Teile Alkylphenolethoxylat überführt. Das Lösungsmittel wird mittels Dampfdestillation entfernt.

Der Rückstand wird abfiltriert und alkalifrei gewaschen. Der Filterkuchen wird in 40 Teilen 10%iger Salzsäure wieder aufgeschlämmt, filtriert, neutral gewaschen und der Filterkuchen getrocknet. Man erhält 9,1 Teile rohes Trichlorphenoxy-CuPc.

b) Folgendes Gemisch wird in einer mit 12 mm Stahlkugeln beschickten 1 l-Vibrationsmühle gemahlen:

| | |
|---|---|
| 24,0 Teile | rohes CuPc |
| 0,5 Teile | des wie unter a) beschrieben erhaltenen rohen Trichlorphenoxy-CuPc |
| 57,5 Teile | Natriumchlorid |
| 13,0 Teile | wasserfreies Calciumchlorid |
| 4,0 Teile | wasserfreies Natriumacetat |

Nach der Mahlung wird das Mahlgut einer sauren Lösung enthaltend 500 Teile Wasser und 30 Teile konzentrierter Salzsäure zugegeben, auf 60°C erwärmt und 30 Minuten gerührt. Die Aufschlämmung wird dann filtriert und der Filterkuchen mit Wasser säure- und salzfrei gewaschen und bei 60°C getrocknet.

Das erhaltene Pigment wird gemäss den in Beispiel 1 beschriebenen Methoden in PVC eingearbeitet und ergibt ähnliche Resultate.

Beispiel 13

a) 8,1 Teile Phthalsäureanhydrid, 1,45 Teile Kupfer(I)chlorid und 13,3 Teile Harnstoff werden in einem mit Rührer versehenen Reaktorkessel einem Gemisch aus 23,3 Teilen o-Nitrotoluol, 0,05 Teilen Ammoniummolybdat und 0,1 Teil 3,4,6-Trichlor -5-phenoxy-2-cyanbenzoesäure-methylester unter Rühren zugegeben.

Die Temperatur wird innert 4 Stunden auf 165-170°C erhöht und das Reaktionsgemisch bis zum Schluss der Reaktion unter Rühren reagieren gelassen.

Die Reaktionsmasse wird danach in einen zweiten, ebenfalls mit Rührer versehenen Reaktionskessel enthaltend 27,3 Teile Wasser, 4,3 Teile 47%ige Natronlauge, 0,16 Teile geschwefeltes Rizinusöl und 0,25 Teile Alkylphenolethoxylat überführt. Das Lösungsmittel wird mittels Dampfdestillation entfernt.

Der Rückstand wird abfiltriert und alkalifrei gewaschen. Der Filterkuchen wird in 40 Teilen 10%iger Salzsäure wieder aufgeschlämmt, filtriert, neutral gewaschen und der Filterkuchen getrocknet. Man erhält 6,8 Teile rohes CuPc enthaltend 2,7 % (2,0 Mol%) Trichlorphenoxy-CuPc.

b) Folgendes Gemisch wird in einer mit 12 mm Stahlkugeln beschickten 1 l-Vibrationsmühle gemahlen:

| | |
|---|---|
| 19,48 Teile | des wie unter a) beschrieben erhaltenen rohen CuPc enthaltend 2,7 % Trichlorphenoxy-CuPc |
| 23,05 Teile | Natriumchlorid |
| 23,05 Teile | wasserfreies Calciumchlorid |

Nach der Mahlung wird das Mahlgut einer sauren Lösung enthaltend 500 Teile Wasser und 30 Teile konzentrierter Salzsäure zugegeben, auf 60°C erwärmt und 30 Minuten gerührt. Die Aufschlämmung wird dann filtriert und der Filterkuchen mit Wasser säure- und salzfrei gewaschen und bei 60°C getrocknet.

Das erhaltene Pigment wird gemäss den in Beispiel 1 beschriebenen Methoden in PVC eingearbeitet und ergibt ähnliche Resultate.

Beispiel 14

Das Beispiel 11 wird wiederholt, indem anstelle von 2,0 Teilen des Trichlorphenoxy-CuPc enthaltenden rohen CuPc gemäss Beispiel 1a) 1,5 Teile Trichlorphenoxy-CuPc gemäss Beispiel 12a) eingesetzt werden.

Das erhaltene Pigment wird gemäss der in Beispiel 1 unter Versuch 2 beschriebenen Methode in PVC eingearbeitet.

Die erhaltenen gepressten PVC-Folien besitzen in beiden Fällen die für $\beta$-CuPc charakteristische grünstichige blaue Farbe. Die beiden Folien unterscheiden sich bezüglich Farbton und Farbstärke kaum oder gar nicht voneinander.

Wenn aber das Pigment ohne Zusatz von Trichlorphenoxy-CuPc hergestellt wird, so ist die PVC-Folie, die mit der hitzebehandelten Weichmacher-Dispersion hergestellt wird, erheblich farbschwächer als jene, die mit der unbehandelten Weichmacher-Dispersion hergestellt wird.

Beispiel 15

Das Beispiel 14 wird einschliesslich der Mahlung in genau gleicher Weise wiederholt.

Nach der Mahlung wird jedoch das Verfahren in abgeänderter Weise wie folgt durchgeführt: Das Mahlgut wird in 400 Teile eines azeotropen Isopropanol/Wasser-Gemisches zugegeben, auf Rückflusstemperatur erhitzt und 4 Stunden unter Rückfluss gekocht. Dann werden 450 Teile Wasser zugegeben, wieder auf Destillationstemperatur erhitzt und das Lösungsmittel abdestilliert. Danach wird konzentrierte Salzsäure zugegeben, bis die Aufschlämmung pH 1 erreicht hat, und 30 Minuten bei 60°C gerührt. Die Aufschlämmung wird dann filtriert und der Filterkuchen mit Wasser säure- und salzfrei gewaschen und bei 60°C getrocknet.

Das so erhaltene Pigment wird wie in Beispiel 14 beschrieben in PVC eingearbeitet und ergibt ähnliche Resultate.

**Patentansprüche**

1.  Verfahren zur Umwandlung von rohem Kupferphthalocyanin (CuPc) in die Pigmentform, durch an sich bekannte Methoden, dadurch gekennzeichnet, dass 0,5 bis 30 Gew.%, bezogen auf CuPc, Trichlorphenoxy-CuPc, welches zusammen mit CuPc und/oder chloriertem CuPc, durch Ersatz von 0,5 bis 25 Gew.% des für die Herstellung von CuPc oder chloriertem CuPc verwendeten Phthalsäureanhydrids mit einer äquivalenten Menge an 3,4,6-Trichlor-5-phenoxy-2-cyanbenzoesäurealkyl- oder -phenylester erhalten wird, im rohen CuPc während der Konditionierung eingearbeitet wird.

2.  Verfahren gemäss Anspruch 1, dadurch gekennzeichnet, dass 1 bis 10 Gew.%, bezogen auf CuPc, Trichlorphenoxy-CuPc eingesetzt werden.

3.  Verfahren gemäss Anspruch 1, dadurch gekennzeichnet, dass das rohe CuPc 0 bis 6 Gew.% Chlor in 2-Stellung enthält.

4.  Verfahren gemäss Anspruch 1, dadurch gekennzeichnet, dass das rohe CuPc mit dem Trichlorphenoxy-CuPc vermischt und in Gegenwart eines nach dem Mahlen entfernbares Mahlhilfsmittel in fester Partikelform gemahlen wird.

5.  Verfahren gemäss Anspruch 4, dadurch gekennzeichnet, dass die Mahlung in Gegenwart von 0,5 bis 10 Gew.%, bezogen auf die Gesamtmenge der CuPc-Zusammensetzung, einer organischen Flüssigkeit durchgeführt wird.

6.  Verfahren gemäss Anspruch 4, dadurch gekennzeichnet, dass das gemahlene Material nachträglich mit Isopropanol behandelt wird.

7.  Verfahren gemäss Anspruch 1, dadurch gekennzeichnet, dass das rohe CuPc mit dem Trichlorphenoxy-CuPc vermischt wird, das Gemisch mit konzentrierter Schwefelsäure behandelt oder darin gelöst wird und danach das CuPc durch Eintragen der sauren Lösung oder Aufschlämmung in Wasser wieder ausgefällt wird.

8.  Verfahren gemäss Anspruch 1, dadurch gekennzeichnet, dass das rohe CuPc in konzentrierter Schwefelsäure gelöst und durch Eintragen der Lösung in Wasser wieder ausgefällt wird und das erhaltene Produkt gemahlen wird, wobei das Trichlorphenoxy-CuPc während des Mahlprozesses eingearbeitet wird.

9.  Verfahren gemäss einem der Ansprüche 7 oder 8, dadurch gekennzeichnet, dass dem Wasser, vor dem Eintragen der sauren Lösung oder Aufschlämmung, 0,5 bis 10 Gew.%, bezogen auf die Gesamtmenge der CuPc-Zusammensetzung, eines oberflächenaktiven Mittels zugegeben werden.

10. Verfahren gemäss Anspruch 1, dadurch gekennzeichnet, dass 3,4,6-Trichlor-5-phenoxy-2-cyanbenzoesäure-methylester eingesetzt wird.

11. Hochmolekulares organisches Material enthaltend als Farbstoff ein nach dem Verfahren gemäss Anspruch 1 erhaltenes CuPc in Pigmentform.

**12.** Lack-, Anstrich- oder Druckfarbe enthaltend als Farbstoff ein nach dem Verfahren gemäss Anspruch 1 erhaltenes CuPc in Pigmentform.

**13.** Organische Polymere enthaltend als Farbstoff ein nach dem Verfahren gemäss Anspruch 1 erhaltenes CuPc in Pigmentform.

**Claims**

**1.** A process for converting crude copper phthalocyanine (CuPc) to the pigment form by methods known per se, wherein 0.5 to 30 % by weight, based on CuPc, of trichlorophenoxy CuPc obtained together with CuPc and/or chlorinated CuPc by replacing 0.5 to 25 % by weight of the phthalic anhydride used in the preparation of CuPc or chlorinated CuPc by an equivalent amount of alkyl or phenyl 3,4,6-trichloro-5-phenoxy-2-cyanobenzoate, is incorporated into the crude CuPc during processing.

**2.** A process according to claim 1, wherein 1 to 10 % by weight, based on CuPc, of trichlorophenoxy CuPc is used.

**3.** A process according to claim 1, wherein the crude CuPc contains 0 to 6 % by weight of chlorine in the 2-position.

**4.** A process according to claim 1, wherein the crude CuPc is mixed with the trichlorophenoxy CuPc and the mixture is milled in the presence of a solid particulate grinding aid which can be removed after milling.

**5.** A process according to claim 4, wherein the milling is carried out in the presence of 0.5 to 10 % by weight, based on the total amount of the CuPc composition, of an organic liquid.

**6.** A process according to claim 4, wherein the ground material is subsequently treated with isopropanol.

**7.** A process according to claim 1, wherein the crude CuPc is mixed with the trichlorophenoxy CuPc, the mixture is treated with concentrated sulfuric acid or dissolved therein and the CuPc is then reprecipitated by adding the acid solution to water or forming a suspension in water.

**8.** A process according to claim 1, wherein the crude CuPc is dissolved in concentrated sulfuric acid and reprecipitated by adding the solution to water and the resulting product is milled, the trichlorophenoxy CuPc being incorporated during the milling process.

**9.** A process according to either claim 7 or claim 8, wherein 0.5 to 10 % by weight, based on the total amount of the CuPc composition, of a surfactant is added to the water before adding the acid solution or forming a suspension.

**10.** A process according to claim 1, wherein methyl 3,4,6-trichloro-5-phenoxy-2-cyanobenzoate is used.

**11.** A high molecular weight organic material containing, as colorant, a pigmentary CuPc obtained by the process according to claim 1.

**12.** A coloured varnish, paint or ink containing, as colorant, a pigmentary CuPc obtained by the process according to claim 1.

**13.** An organic polymer containing, as colorant, a pigmentary CuPc obtained by the process according to claim 1.

**Revendications**

**1.** Procédé pour transformer, par des méthodes connues en elles-mêmes, de la phtalocyanine de cuivre (CuPc) brute pour la faire passer sous forme pigmentaire, procédé caractérisé en ce qu'on incorpore à la CuPc brute, pendant le traitement de mise en état ou de conditionnement, 0,5 à 30 % en poids, par rapport à la CuPc, de trichlorophénoxy-CuPc, qui a été obtenue avec la CuPc et/ou avec de la CuPc chlorée, par remplacement de 0,5 à 25 % en poids de l'anhydride de l'acide phtalique, utilisé pour la préparation de la CuPc ou de la CuPc chlorée, par une quantité équivalente d'un ester alkylique ou phénylique de l'acide 3,4,6-trichloro-5-phénoxy-2-cyanobenzoïque.

2. Procédé selon la revendication 1, caractérisé en ce qu'on utilise 1 à 10 % en poids, par rapport à la CuPc, de trichlorophénoxy-CuPc.

3. Procédé selon la revendication 1, caractérisé en ce que la CuPc brute contient 0 à 6 % en poids de chlore en position 2.

4. Procédé selon la revendication 1, caractérisé en ce qu'on mélange la CuPc brute avec la trichlorophénoxy-CuPc et l'on broye le mélange en présence d'un auxiliaire ou adjuvant de broyage, sous forme de particules solides, pouvant être séparées après le broyage.

5. Procédé selon la revendication 4, caractérisé en ce qu'on conduit le broyage en présence de 0,5 à 10 % en poids, par rapport à la quantité totale de la composition de CuPc, d'un liquide organique.

6. Procédé selon la revendication 4, caractérisé en ce qu'on traite par la suite, par de l'isopropanol, la matière broyée.

7. Procédé selon la revendication 1, caractérisé en ce qu'on mélange la CuPc brute avec la trichlorophénoxy-CuPc, on traite le mélange par de l'acide sulfurique concentré ou on l'y dissout, puis l'on précipite à nouveau le CuPc par introduction de la solution acide dans de l'eau ou par mise en suspension dans de l'eau.

8. Procédé selon la revendication 1, caractérisé en ce qu'on dissout la CuPc brute dans de l'acide sulfurique concentré et on la précipite à nouveau par introduction de la solution dans de l'eau, et l'on broye le produit ainsi obtenu, en incorporant la trichlorophénoxy-CuPc pendant l'opération de broyage.

9. Procédé selon l'une des revendications 7 ou 8, caractérisé en ce qu'on ajoute à l'eau, avant l'introduction de la solution acide ou de la suspension, 0,5 à 10 % en poids, par rapport à la quantité totale de la composition de CuPc, d'un agent tensio-actif.

10. Procédé selon la revendication 1, caractérisé en ce qu'on utilise le 3,4,6-trichloro-5-phénoxy-2-cyanobenzoate de méthyle.

11. Matière organique à poids moléculaire élevé, contenant comme colorant une CuPc sous forme pigmentaire, obtenue par le procédé selon la revendication 1.

12. Laque, peinture ou encre d'impression contenant, à titre de colorant, une CuPc sous forme pigmentaire, obtenue par le procédé selon la revendication 1.

13. Polymères organiques contenant, comme colorant, une CuPc sous forme pigmentaire, obtenue par le procédé selon la revendication 1.